(19) Europäisches Patentamt
European Patent Office
Office européen des brevets

(11) Veröffentlichungsnummer: **0 285 967**
**A2**

(12) **EUROPÄISCHE PATENTANMELDUNG**

(21) Anmeldenummer: **88105025.6**

(22) Anmeldetag: **29.03.88**

(51) Int. Cl.[4]: **C08L 71/04 , C08L 33/18 , C08L 25/02 , C08L 37/00 , C08L 39/04 , C08L 29/00 , C08L 35/00**

(30) Priorität: **07.04.87 DE 3711619**

(43) Veröffentlichungstag der Anmeldung: **12.10.88 Patentblatt 88/41**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Ostermayer, Bertram, Dr.**
**Pfaffenpfad 14**
**D-6701 Roedersheim-Gronau(DE)**
Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann-Strasse 53**
**D-6717 Hessheim(DE)**
Erfinder: **Gausepohl, Hermann, Dr.**
**Neuweg 10**
**D-6704 Mutterstadt(DE)**

(54) **Thermoplastische Formmassen auf Basis von Polyphenylenether.**

(57) Thermoplastische Formamassen auf Basis von Polyphenylenether, erhältlich durch Mischen bei Temperaturen zwischen 200 und 320°C während 0,5 bis 30 Minuten von im wesentlichen

A) 2 bis 97,99 Gew.-Teilen eines Polymeranteils, der zu mindestens 55 Gew.%, bezogen auf A, aus Polyphenylenether ($A_1$) und zum übrigen Teil aus einem vinylaromatischen Polymerisat $A_2$ besteht,

B) 2 bis 97,99 Gew.-Teile eines thermoplastischen Copolymerisates aus 30 bis 90,9 Gew.%, bezogen auf B, eines Vinylaromatischen Kohlenwasserstoffes mit 8 bis 12 C-Atomen ($b_1$),
9 bis 40 Gew.%, bezogen auf B, eines nitrilgruppenhaltigen, ethylenisch ungesättigten Monomeren mit 3 bis 6 C-Atomen ($b_2$),
0,1 bis 30 Gew.%, bezogen auf B, einer copolymerisierbaren $\alpha,\beta$-ungesättigten Dicarbonylverbindung ($b_3$) oder eines eine Epoxidgruppe ($b_4$), Oxazolingruppe ($b_5$) oder Hydroxylgruppe ($b_6$) tragenden copolymerisierbaren ethylenisch ungesättigten Monomeren oder eines Gemisches von mindestens zwei der Verbindungen $b_3$ bis $b_6$ und 0 bis 30 Gew.% bezogen auf B, mindestens eines von $b_1$ bis $b_6$ verschiedenen, copolymerisierbaren, ethylenisch ungesättigten Monomeren $b_7$ und

C) 0,01 bis 20 Gew.-Teilen eines von B verschiedenen polymeren Kopplungsmittel, das Anhydrid-, Epoxid-, Oxazolin-und/oder Hydroxylgruppen enthält. wobei die Summe aus A, B und C 100 Gew.-Teile ergibt. und deren Herstellung.

EP 0 285 967 A2

## Thermoplastische Formmassen auf Basis von Polyphenylenether

Die Erfindung betrifft thermoplastische Formmassen auf Basis von Polyphenylenether, erhältlich durch Mischen bei Temperaturen zwischen 200 und 320°C während 0,5 bis 30 Minuten von im wesentlichen

A) 2 bis 97,99 Gew.-Teilen eines Polymeranteils, der zu mindestens 55 Gew.%, bezogen auf A, aus Polyphenylenether ($A_1$) und zum übrigen Teil aus einem vinylaromatischen Polymerisat $A_2$ besteht,

B) 2 bis 97,99 Gew.-Teilen eines thermoplastischen Copolymerisates aus 30 bis 90,9 Gew.%, bezogen auf B, eines vinylaromatischen Kohlenwasserstoffes mit 8 bis 12 C-Atomen ($b_1$),
9 bis 40 Gew.%, bezogen auf B, eines nitrilgruppenhaltigen, ethylenisch ungesättigten Monomeren mit 3 bis 6 C-Atomen ($b_2$),
0,1 bis 30 Gew.%, bezogen auf B, einer copolymerisierbaren $\alpha,\beta$-ungesättigten Dicarbonylverbindung ($b_3$) oder eines eine Epoxidgruppe ($b_4$), Oxazolingruppe ($b_5$) oder Hydroxylgruppe ($b_6$) tragenden copolymerisierbaren ethylenisch ungesättigten Monomeren oder eines Gemisches von mindestens zwei der Verbindungen $b_3$ bis $b_6$ und 0 bis 30 Gew.%, bezogen auf B, mindestens eines von $b_1$ bis $b_6$ verschiedenen, copolymerisierbaren, ethylenisch ungesättigten Monomeren $b_7$ und

C) 0,01 bis 20 Gew.-Teilen eines von B verschiedenen polymeren Kopplungsmittels, das Anhydrid-, Epoxid-, Oxazolin-und/oder Hydroxylgruppen enthält, wobei die Summe aus A, B und C 100 Gew.-Teile ergibt.

Thermoplastische Formmassen, die Styrolpolymerisate und Polyphenylenether (PPE) enthalten, sind z.B. aus den US-Patentschriften 3 383 435, 4 128 602 sowie 4 128 603 bekannt. Solche Formmassen eignen sich zur Herstellung von Formteilen, die eine bessere Wärmeformbeständigkeit haben als solche Formteile, die kein Polyphenylenether enthalten.

Es ist in der US-Patentschrift 4 360 618 vorgeschlagen worden, Styrolpolymerisate, die 2 bis 8 Gew.% Acrylnitril einpolymerisiert enthalten, zur Herstellung von Formteilen zu verwenden. Es zeigte sich jedoch, daß schon bei höheren Acrylnitrilgehalten, die über 8,5 Gew.% liegen, eine Unverträglichkeit mit dem Polyphenylenether (PPE) auftritt, so daß Formkörper mit schlechten mechanischen Werten aus derartigen Mischungen erhalten werden. Formmassen, die PPE und Styrolacrylnitrilcopolymerisate mit höheren Gehalten an Acrylnitril (SAN), die gegebenenfalls schlagzäh modifiziert sind, haben sich daher bislang nicht eingeführt.

In der US-Patentschrift 4 387 189 werden Copolymerisate aus Styrol und Säure-, Säureanhydrid-oder Säurechlorid-Comonomeren, die gegebenenfalls Acrylnitril enthalten können, mit PPE umgesetzt. Nachteilig ist die nicht ausreichende mechanische Stabilität der Formkörper, besonders wenn die Copolymeren Acrylnitril enthalten, was vermutlich in der geringen Reaktivität der Comonomeren zum PPE bei Anwesenheit von Acrylnitril begründet ist. Dies gilt insbesondere dann, wenn das Copolymere durch gepfropfte Butadien-oder Acrylatkautschuke schlagzäh modifiziert ist.

In den EP-B-156 990, EP-A-170 946 und EP-A-200 185 werden spezielle Pfropfcopolymerisate, die aus PPE und Styrolacrylnitril-Copolymerisaten mit besonderen Monomerbausteinen unter Zuhilfenahme spezieller Kopplungsmittel erhalten wurden, beschrieben.

Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Die Flammfestausrüstung von thermoplastischen Kunststoffen ist aus Vogel, "Flammfestmachen von Kunststoffen", Hüthig-Verlag, Heidelberg (1966), Seiten 94 bis 102
Troitsch, "Brandverhalten von Kunststoffen", Hanser-Verlag, München (1982), Seiten 1 bis 65
Hirschler, "Developments in Polymer Stabilization", Band 5 Editor G. Scott, Applied Science Publishers, London (1982), Seiten 107 bis 151
bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmasen zeigen Nachteile, die vom Verarbeiter meist nicht toleriert werden. Charakteristisch sind z.B. die Verfärbung der Formmassen sowie die Korrosion von Verarbeitungsmaschinen.

Ohne Verwendung von Synergisten muß die Flammschutzmittelmenge erhöht werden, was zu einer starken Beeinträchtigung der damit ausgerüsteten Thermoplaste und aufgrund einer deutlichen Absenkung

der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 VO oder UL 94 V1.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So sind aus der DE-A 3 432 749, der DE-A 3 432 750 und der DE-A 3 526 549 selbstverlöschende, halogenfreie Formmassen auf Basis von PPE und Styrol-Acrylnitrilpolymerisaten bekannt. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Der vorliegenden Erfindung lag daher die Aufgabe zugrunde, auf Basis von Polyphenylenether thermoplastische Formmassen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch die eingangs definierten thermoplastischen Formmassen.

Außerdem wurden spezielle Ausgestaltungen der Formmassen gemäß der Unteransprüche und ein Verfahren zu ihrer Herstellung gefunden.

Im folgenden werden die Formmassen im einzelnen beschrieben.

Es versteht sich dabei von selbst, daß für selbstverlöschende halogenfreie thermoplastische Formmassen nur solche Komponenten in Frage kommen, die ihrerseits bis auf Spuren frei von Halogen sind.

Als wesentliche Komponente A werden 2 bis 97,99, bevorzugt 10 bis 89,95, insbesondere 20 bis 79,9 Gew.-Teile, bezogen auf 100 Gew.-Teile der Summe aus A, B und C, eines Polymeranteils, der zu mindestens 55, bevorzugt über 70, insbesondere mindestens 85 Gew.%, bezogen auf A, aus PPE ($A_1$) und zum übrigen aus einem vinylaromatischen Polymerisat $A_2$ besteht, verwendet.

Die in Frage kommenden Polyphenylenether sind an sich bekannt, sie werden nach üblichen Verfahren aus in ortho-Position durch Alkylgruppen, Alkoxygruppen, bei halogenhaltigen Formmassen auch durch Chlor oder Brom disubstituierten Phenolen, durch oxidative Kopplung hergestellt (vgl. US-Patent 3 661 848, 3 378 505, 3 306 874, 3 306 875 und 3 639 656). Die der Alkoxygruppen, die bevorzugt 1 bis 4 C-Atome, aber kein $\alpha$-ständiges tertiäres Wasserstoffatom enthalten, können bei halogenhaltigen Formmassen auch ihrerseits durch Chlor oder Brom substituiert sein.

Die Polyphenylenether sind bevorzugt mit vinylaromatischen Polymerisaten verträglich.

Polymere gelten als miteinander verträglich, wenn sie weitgehend oder ganz ineinander löslich sind (vgl. A. Noshay, "Block Copolymers", Academic Press (1977), Seiten 8 bis 10; sowie O. Olabisi, "Polymer-Polymer Miscibility", Academic Press (1979), Seiten 117 bis 189.

Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylen-ether, Poly-2-ethyl-6-propyl-1,4-phenylenether, bei halogenhaltigen Formmassen auch Poly-2,6-dichlor-1,4-phenylenether und Poly-2,6-dibrom-1,4-phenylenether oder Copolymere, wie solche, die 2,3,6-Trimethylphenol enthalten, außerdem Polymermischungen. Bevorzugt ist Poly-2,6-dimethyl-1,4-phenylenether. Die in einem solchen Verfahren hergestellten Polyphenylenether weisen im allgemeinen eine Viskositätszahl von 0,3 bis 0,7 dl/g, gemessen Chloroform auf.

Das vinylaromatische Polymere ist vorzugsweise mit dem eingesetzten Polyphenylenether verträglich.

Beispiele für bevorzugte, mit Polyphenylenether verträgliche vinylaromatische Polymere sind der bereits erwähnten Monographie von Olabisi, S. 244 bis 230 und 245 zu entnehmen. Nur stellvertretend seien hier Polymere aus überwiegend vinylaromatischen Monomeren, insbesondere Styrol, ferner kern-oder seitenalkylierten Styrolen mit $C_1$-$C_4$-Alkylresten, insbesondere Methyl, genannt, wobei in untergeordneten Mengen (vorzugsweise nicht mehr als 20, insbesondere nicht mehr als 8 Gew.%, bezogen auf die Polymeren) auch Comonomere wie (Meth)acrylnitril oder (Meth)acrylsäureester am Aufbau beteiligt sein können.

Es können auch an sich bekannte, insbesondere durch Butadienpolymerisate, schlagzähmodifizierte Styrolpolymerisate (HIPS) eingesetzt werden.

Homo-oder Copolymerisate werden dabei nach den bekannten Verfahren in Masse, Lösung oder Suspension hergestellt (vgl. Ullmanns Enzyclopädie der Technischen Chemie, Band 19, Seite 265 bis 272, Verlag Chemie, Weinheim 1980). Sie können Viskositätszahlen im Bereich von 0,3 bis 1,0 dl/g, gemessen nach DIN 53726 in Toluol bei 25°C aufweisen. Die üblicherweise zur Herstellung schlagzähmodifizierter Styrolpolymerisate angewandten Verfahren sind die Polymerisation in Masse oder Lösung, wie beispielsweise in der US-Patentschrift 2 694 692 beschrieben und Verfahren zur Masse-Suspensionspolymerisation wie sie beispielsweise in der US-Patentschrift 2 862 906 beschrieben sind. Selbstverständlich sind auch

andere Verfahren anwendbar, sofern die gewünschte Teilchengröße der Kautschukphase eingestellt wird. Die schlagzähen modifizierten Styrolpolymerisate (HIPS) weisen im allgemeinen einen Schmelzindex (MFI 200/5,0, gemessen nach DIN 53 735) von 2 bis 30, insbesondere von 2,5 bis 20 g/10 min auf.

Die erfindungsgemäßen Formmassen enthalten eingemischt 2 bis 97,99, bevorzugt 10 bis 89,95, insbesondere 20 bis 79,9 Gew.-Teile, bezogen auf 100 Gew.-Teile der Summe aus A, B und C, der wesentlichen Komponente B.

Als Komponente B kann ein thermoplastisches Copolymerisat aus 30 bis 90,9, vorzugsweise 40 bis 90,5, insbesondere aus 45 bis 85 Gew.% $b_1$, 9 bis 40, vorzugsweise 9 bis 35 Gew.% $b_2$, 0,1 bis 30, vorzugsweise 0,5 bis 25 Gew.% $b_3$, $b_4$, $b_5$ oder insbesondere $b_6$ oder eines Gemisches mindestens zweier der Verbindungen $b_3$ bis $b_6$ und 0 bis 30, vorzugsweise 0 bis 20 Gew.% $b_7$, wobei die Gew.% auf das Copolymerisat B bezogen sind, verwendet werden.

$b_1$ ist z.B. $\alpha$-Methylstyrol, p-Methylstyrol oder insbesondere Styrol.

Als Beispiele für $b_2$ seien Methacrylnitril oder insbesondere Acrylnitril genannt.

Als $\alpha,\beta$-ungesättigte Dicarbonylverbindung $b_3$ kommt eine Verbindung der allgemeinen Formel I

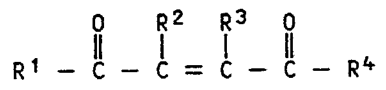

I,

worin

$R^1$, $R^4$ -OH, -O-$C_1$-$C_{25}$-Alkyl, bevorzugt -O-$C_1$-$C_8$-Alkyl -O-Aryl, -$NR^5R^6$ oder gemeinsam -O-oder -$NR^5$-
,
$R^2$ bevorzugt -H oder auch, wenn $R^3$ -H ist, -$C_1$-$C_{25}$-Alkyl, insbesondere -$C_1$-$C_8$-Alkyl, oder Aryl
$R^3$ bevorzugt -H oder auch, wenn $R^2$ -H ist, -$C_1$-$C_{25}$-Alkyl, insbesondere -$C_1$-$C_8$-Alkyl, oder Aryl,
$R^5$, $R^6$ bevorzugt -H oder auch -$C_1$-$C_{25}$-Alkyl, insbesondere -$C_1$-$C_8$-Alkyl, oder Aryl, bedeuten,

in Betracht. Die Substituenten müssen, was sich allerdings von selbst versteht, so beschaffen sein, daß sie die Copolymerisation mit $b_1$ und $b_2$ nicht verhindern. Es handelt sich daher im allgemeinen um $\alpha,\beta$-ungesättigte Dicarbonsäuren, deren Anhydride, Imide, die gegebenenfalls N-substituiert sind, um Monoester oder Monoamide dieser Dicarbonsäuren, ihre Diester oder Diamide. Bevorzugt sind Methylmaleinsäureanhydrid, die Halbester und Halbamide, wie der Halbester aus Maleinsäure und 2 Ethylhexylalkohol, tert.-Butylalkohol oder Isopropylalkohol.

Besonders bevorzugt sind Maleinsäure, Maleinsäureanhydrid und Maleinimid, wobei der Stickstoff durch Phenyl-oder $C_1$-$C_4$-Alkyl substituiert sein kann.

Als epoxidgruppenhaltiges ethylenisch ungesättigtes Monomeres $b_4$ ist prinzipiell jede mit $b_1$ und $b_2$ copolymerisierbare Verbindung geeignet, die eine Epoxidgruppe im Molekül aufweist. Vorzugsweise werden jedoch Monomere verwendet, die Glycidylgruppen tragen, insbesondere Glycidylacrylat und Glycidylmethacrylat. Es eignen sich jedoch auch Glycidylderivate anderer Säuren und Glycidylallyl-und Vinylether. Diese sind allgemein durch die Struktureinheit

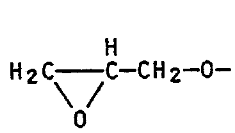

im Molekül charakterisiert.

Als $b_5$ kann das Copolymerisat B mindestens ein mit $b_1$ und $b_2$ copolymerisierbares ethylenisch ungesättigtes Monomeres einpolymerisiert enthalten, das mindestens eine Oxazolingruppe trägt.

Diese Monomeren haben vorzugsweise die allgemeine Formel II

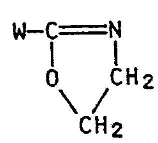

wobei W eine polymerisierbare Doppelbindung enthält. Bevorzugte Substituenten W sind

$CH_2=CR^{13}-$ ,

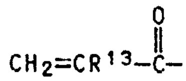 ,

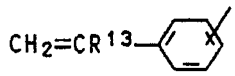

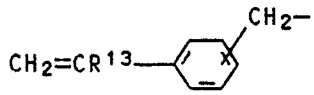 ,

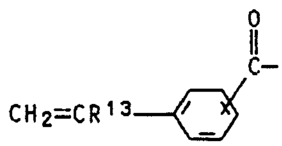 ,

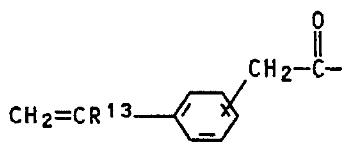

und 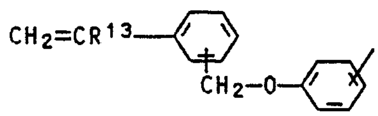 ,

wobei $R^{13}$ ein Wasserstoffatom oder eine Alkyl-oder Alkoxygruppe mit 1 bis 6 C-Atomen sein kann, z.B. Methyl oder auch i-und n-Propyl oder Butyl-, um nur einige zu nennen. Besonders bevorzugte Monomere $b_5$ sind Vinyloxazoline der allgemeinen Formel III

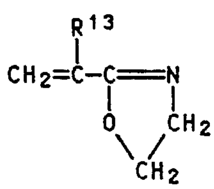 III,

wobei $R^{13}$ die zuvor angegebene Bedeutung hat und vorzugsweise ein Wasserstoffatom oder eine Methylgruppe ist.

Als $b_6$ kommen copolymerisierbare ethylenisch ungesättigte Monomere in Betracht, die mindestens eine Hydroxylgruppe enthalten. Es kann sich dabei um Verbindungen der allgemeinen Formel IV

$CH_2=CR^7\text{-K-OH}$ IV

handeln, wobei

$R^7$ insbesondere Wasserstoff, daneben aber auch $C_1$-$C_{25}$-Alkyl,

K 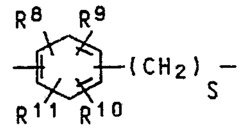 , $-C(=O)-O-L-$,

$-C(=O)-NR^7-L-$, daneben auch

$-C(=O)-O-CH_2-CH(OH)-CH_2-$,

$R^8$ bis $R^{11}$ Wasserstoff oder Methyl, daneben auch $C_2$-$C_8$-Alkyl.
S eine ganze Zahl von 0 bis 6, insbesondere 0 bis 2, und
L ein Brückenglied bedeuten.

Als Brückenglied L kommt insbesondere $C_1$-$C_4$-Alkylen, aber auch $C_5$-$C_{25}$-Alkylen, $C_6$-$C_{12}$-Cycloalkylen,

$$-(CH_2)_3{}_j-O-[-C(=O)(CH_2)_5-]_k-$$

wobei j = 2 bis 10 und k = 1 bis 10 ist,

$$-(CH_2-CH_2-O-)_h-CH_2-CH_2-\ ,$$

$$-(CH_2-CH(CH_3)-O-)_h-CH_2-CH(CH_3)-\quad \text{oder}$$

$$-(CH_2-CH_2-O-)_h-(CH_2-CH(CH_3)-O-)_i-CH_2-C(R^{12})-\ ,$$

wobei h, i = 1, 2 oder auch 3 bis 20 ist und $R^{12}$ = H oder $CH_3$ ist, in Betracht.

Besonders bevorzugte Verbindungen sind Hydroxyethyl-und -propylacrylat, die entsprechenden Methacrylate oder Vinylbenzylalkohol.

Unter ethylenisch ungesättigten Monomeren $b_7$ werden solche Verbindungen verstanden, die mit $b_1$ und $b_2$ copolymerisierbar sind. Beispielsweise können Vinylester, Vinylether oder (Meth)acrylate, die sich von $C_1$-$C_8$-Alkoxygruppen ableiten, (Meth)acrylamid, wobei der Stickstoff durch $C_1$-$C_8$-Alkyl substituiert sein kann, und insbesondere Vinylacetat oder Methylmethacrylat eingesetzt werden. In bevorzugten Formmassen fehlt $b_7$.

Das Copolymerisat B weist im allgemeinen Viskositätszahlen, bestimmt in 0,5 %-iger Lösung in Dimethylformamid bei 25°C nach DIN 53 726, von 0,5 bis 1,5 dl/g auf. Es kann in bekannter Weise in Lösung, Emulsion oder Masse kontinuierlich oder diskontinuierlich hergestellt werden.

Die Komponente C wird in Mengen von 0,01 bis 20, bevorzugt 0,05 bis 15, insbesondere 0,1 bis 12 Gew.-Teilen, bezogen auf 100 Gew.-Teile der Summe aus A, B und C, in den erfindungsgemäßen Formmassen verwendet.

C ist als polymeres Kopplungsmittel zusätzlich zur Komponente B zur Verträglichkeitserhöhung der in der Formmasse vorliegenden Komponenten notwendig. Es handelt sich um von B verschiedene vinylaromatische Polymerisate, die Hydroxygruppen, bevorzugt Anhydrid-, Epoxid-und/oder Oxazolingruppen enthalten.

Die Molekulargewichte der Polymeren können zwischen 500 und 1 000 000 liegen.

Sie können in bekannter Weise in Lösungs-oder Massepolymerisation hergestellt werden.

Bewährt haben sich Copolymerisate $C_1$ aus 30 bis 90, bevorzugt 40 bis 60 Gew.% $b_1$, insbesondere Styrol, 10 bis 70, bevorzugt 40 bis 60 Gew.% $C_1$-$C_6$-Alkanolester der Acryl-oder Methacrylsäure und/oder $b_3$, insbesondere Maleinsäureanhydrid und 0 bis 30 Gew.%, jeweils bezogen auf das Copolymerisat, weiteren olefinisch ungesättigten Monomeren, die mit den oben genannten Monomeren Copolymerisate bilden. Solche Monomere sind z.B. N-Vinylpyrrolidon, Acrylamid, Methacrylamid, Acrolein und Allylalkohol.

Auch können Olefine, wie Isobutylen, Diisobuten und Triisobuten eingesetzt werden.

Die Molekulargewichte der Copolymerisate (Zahlenmittel) liegen im allgemeinen zwischen 500 und 20000 (osmometrisch gemessen in Aceton 1 bis 5 Gew.%). Vorzugsweise liegen die Molekulargewichte im Bereich von 500 bis 7000, insbesondere zwischen 800 und 2000. Die Herstellung dieser Polymerisate ist bekannt. Sie wird vorzugsweise durch radikalische Polymerisation der Monomeren in Lösung oder Masse vorgenommen.

Diese Copolymerisate $C_1$ sind an sich bekannt aus der US-PS 4 387 189.

Ebenfalls gute Erfolge werden mit Copolymerisaten $C_2$ erzielt, die zu 80 bis 99,5 Gew.%, insbesondere 90 bis 98 Gew.% aus $b_1$, insbesondere Styrol, und zu 0,5 bis 20, bevorzugt 2 bis 10 Gew.% aus $b_4$, insbesondere Glycidylacrylat und Glycidylmethacrylat und gegebenenfalls zu 0 bis 20 Gew.%, jeweils bezogen auf $C_2$, aus weiteren, olefinisch ungesättigten Monomeren bestehen. Beispiele dieser Monomeren sind bei $C_1$ aufgeführt. Die Molekulargewichte (Gewichtsmittel) von $C_2$ liegen im allgemeinen zwischen 20000 und 1000000, bevorzugt 35000 bis 250000.

Die Herstellung der Copolymerisate $C_2$ kann auf an sich bekannte Weise durch Masse-, Lösungs-, Emulsions-oder Suspensionspolymerisation sowohl kontinuierlich als auch ansatzweise erfolgen. Vorzugsweise polymerisiert man die Monomeren in einem geeigneten Lösungsmittel, wie z.B. Ethylbenzol. In einer besonders bevorzugten Ausführungsform werden die Monomeren bei 120 bis 150°C mit Radikalstarter oder insbesondere thermisch, d.h. ohne Initiator, kontinuierlich bei erhöhtem Druck polymerisiert.

Die Copolymerisate $C_2$ sind an sich bekannt aus der EP-A-237 710.

Ebenso bewährt haben sich Copolymerisate $C_3$ aus 30 bis 99,95 Gew.%, bevorzugt 80 bis 99,5, insbesondere 90 bis 99,5 Gew.% $b_1$, insbesondere Styrol, mindestens 0,05 Gew.%, bevorzugt 0,5 bis 10 Gew.% $b_5$, insbesondere Vinyloxazoline der allgemeinen Formel III, und 0 bis 20, bevorzugt 0 bis 10 Gew.%, jeweils bezogen auf 100 Gew.% des Copolymerisates, weiterer olefinisch ungesättigter Monomerer. Beispiele dieser Monomeren sind die entsprechenden bei $C_1$ aufgeführten Verbindungen.

Für das Molekulargewicht und die Herstellung von $C_3$ gilt das bei $C_2$ ausgeführte, so daß sich hier weitere Erläuterungen erübrigen.

Die Copolymerisate $C_3$ sind an sich bekannt aus der DE-A-36 19 224 bzw. EP-A-237 710.

Daneben können auch Copolymerisate $C_4$ verwendet werden, die 10 bis 99,95, bevorzugt 80 bis 99,7, insbesondere 92 bis 99 Gew.% $b_1$, insbesondere Styrol, 0,05 bis 90, bevorzugt 0,3 bis 20, insbesondere 1 bis 8 Gew.% $b_6$, insbesondere Hydroxyethyl-und -propyl(meth)acrylat, und 0 bis 20, bevorzugt 0 bis 10 Gew.%, jeweils bezogen auf das Copolymerisat, weitere olefinisch ungesättigte Monomere enthalten. Beispiele dieser Monomeren sind die entsprechenden bei $C_1$ aufgeführten Verbindungen.

Die Gewichtsmittel der Molekulargewichte liegen im allgemeinen zwischen 8000 bis 1000000, bevorzugt 10000 und 100000.

Die Herstellung dieser Copolymerisate kann wie bei $C_2$ näher beschrieben in bekannter Weise durch kontinuierliche oder diskontinuierliche radikalische Polymerisation der Monomeren in Lösung oder Masse erfolgen.

Von diesen Copolymerisaten, von denen auch Gemische eingesetzt werden können, sind $C_1$, $C_2$ und $C_3$ besonders bevorzugt.

Zur Flammfestausrüstung können die erfindungsgemäßen Formmassen, wenn sie halogenfrei sind, zusätzlich 1 bis 40, insbesondere 5 bis 20, besonders bevorzugt 7 bis 15 Gew.%, bezogen auf die Formmasse, einer Phosphor enthaltenden Verbindung D enthalten.

Es handelt sich dabei um organische und anorganische, Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phoshin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von geeigneten phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein.

Beispiele sind Calciumhypophosphit und Magnesiumhypophosphit, daneben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl-(Alkyl)phosphinsäureamide, wie z.B. Diphenylphosphinäsure-dimethylamid und Sulfonamidoaryl(alkyl)-phosphinsäurederivate, wie z.B. p-Tolylsulfonamidodiphenylphosphinsäure. Bevorzugt eingesetzt werden Hydrochinon-und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris-(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl-und arylsubstituierte Phosphate in Betracht. Beispiele sind Phenylbisdodecylphosphat, Phenylethylhydrogenphosphat, Phenyl-bis-(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)-phosphinsäuren wie z.B. Poly-[natrium(I)-methylphenylphosphinat] eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A, Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi-und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486,

z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphin-säureester, Methylneopentylphosphat (Methanphosphonsäureneopentylester) und Mobil Antiblaze 19.

Zur Schlagzäh-Modifizierung können die erfindungsgemäßen Formmassen zusätzlich als Komponente E Synthesekautschuk eingemischt enthalten, der von den oben beschriebenen gepfropften Butadien-und Acrylatkautschuken oder schlagzäh modifizierten Styrolpolymerisaten verschieden ist. In Frage kommen Elastomere wie Polybutadienkautschuk, Acrylatkautschuk, Styrolbutadienkautschuk, Polybutenkautschuk, hydrierter Styrolbutadienkautschuk, Acrylnitrilbutadienkautschuk, Ethylenpropylenkautschuk, Polyisoprenkautschuk, styrolgepfropfte Ethylenpropylenkautschuke, thermoplastische Ethylenpropylenkautschuke, thermoplastische Polyesterelastomere, Ethylenkautschuke und Ionomere, Styrolbutadienblockcopolymere einschließlich AB-, ABA-, ABAB-verschmiert-(taper)-, Stern-Blöcke und ähnliche, analoge Isoprenblockpolymerisate und insbesondere (teil)hydrierte Blockcopolymere. Die Komponente E kann in Mengen bis 40, vorzugsweise zwischen 1 und 20 Gew.%, bezogen auf die Formmasse eingesetzt werden.

In einigen Fällen hat es sich als vorteilhaft herausgestellt, wenn die Formmassen zusätzlich mindestens eine der Komponenten F oder G enthalten.

Das Copolymerisat F kann vom 0,05fachen bis zur 4fachen, bevorzugt bis zu 2fachen, insbesondere bis zur 0,6fachen Gewichtsmenge der in der Formmasse vorliegenden Komponente B verwendet werden. F ist ein Copolymerisat aus mindestens 50 Gew.%, bezogen auf F, eines vinylaromatischen Kohlenwasserstoffs mit 8 bis 12 C-Atomen, wie $\alpha$-Methylstyrol, para-Methylstyrol, oder insbesondere Styrol selbst und einem nitrilgruppenhaltigen, ethylenisch ungesättigten Monomeren mit 3 bis 6 C-Atomen, insbesondere Acrylnitril oder Methacrylnitril. Es enthält bevorzugt 15 bis 40, insbesondere 20 bis 38 Gew.%, bezogen auf F, der einpolymerisierten Nitrilmonomeren. Es kann ferner noch bis 10 Gew.%, bezogen auf F, Monomere wie Methacrylsäureester, Acrylsäureester z.B. Methylmethacrylat oder Ethylmethacrylat, Butylacrylat oder 2-Ethylhexylacrylat sowie Methacrylamide oder Acrylamide oder Gemische dieser Verbindungen einpolymerisiert enthalten.

Diese Copolymerisate F sind an sich bekannt und im Handel erhältlich. Sie werden in üblicher Weise in Lösung, Emulsion oder Masse kontinuierlich oder diskontinuierlich hergestellt. Das Copolymerisat F weist im allgemeinen Viskositätszahlen von 0,5 bis 1,5 dl/g auf.

Das Pfropfmischpolymerisat G kann bis zu 40, bevorzugt zwischen 2 und 30 Gew.%, bezogen auf die Formmasse, eingesetzt werden. Bei halogenfreien, selbstverlöschenden Formmassen hat sich ein geringerer Anteil, nämlich zwischen 2 und 20 Gew.%, bezogen auf Formmasse, bewährt.

Bei der Komponente G handelt es sich um ABS-und ASA-Polymerisate, wie sie aus Ullmanns Encyclopädie der technischen Chemie, 4. Auflage 1980, Bd. 19, S 277 bis 295 bekannt sind. G ist ein Pfropfmischpolymerisat aus 30 bis 90, bevorzugt 40 bis 85, insbesondere 55 bis 78 Gew.%, bezogen auf das Pfropfmischpolymerisat, eines Butadien-oder Acrylatkautschukes, auf den 10 bis 70, bevorzugt 15 bis 60, insbesondere 22 bis 45 Gew.%, bezogen auf das Pfropfmischpolymerisat, einer Monomermischung, enthaltend vinylaromatische und nitrilgruppenhaltige Verbindungen, als Pfropfhülle pfropfmischpolymerisiert sind.

Der an sich bekannte Butadienkautschuk (EP-A 199 334), der die Pfropfgrundlage des Pfropfmischpolymerisates bilden kann, sollte eine Glastemperatur (nach K.H. Illers und H. Breuer, Kolloid-Zeitschrift 176, (1961), Seite 110) aufweisen, die unter 0°C liegt. Als Kautschuk kommen beispielsweise in Frage: Polybutadien (vgl. DE-A 14 20 775 und DE-A 14 95 089), daneben auch Copolymerisate aus überwiegend Butadien und Styrol mit Comonomeren wie Isopren, Acrylnitril oder Vinylmethylether.

Die Pfropfgrundlage kann auch ein an sich bekanntes (EP-A 201 763) Acrylesterpolymerisat sein, dessen Glastemperatur unter 0°C, bevorzugt unter -30°C liegt. Als Monomere kommen als Hauptkomponente mit mehr als 50 Gew.%, bezogen auf das Acrylesterpolymerisat, Alkylacrylate mit 1 bis 8 C-Atomen im Alkylrest in Frage, wie n-Butylacrylat oder 2-Ethyl-hexyl-acrylat und gegebenenfalls auch noch bis zu 49,9, insbesondere 10 bis 20 Gew.% eines weiteren copolymerisierbaren Monomeren wie Butadien, Isopren, Styrol, Acrylnitril oder Vinylmethylether oder Mischungen davon. Bevorzugt sind diese Acrylesterpolymerisate vernetzt. In diesem Falle enthält die Monomermischung 0,1 bis 5, bevorzugt 1 bis 4 Gew.%, bezogen auf das Acrylesterpolymerisat, an mehrfunktionellen Monomeren, wie Divinylbenzol oder Di-hydrodicyclo-pentadienylacrylat.

Die Monomermischung, aus der die Pfropfhülle entsteht, enthält 60 bis 93 Gew.%, bezogen auf die Monomermischung, des Monomeren $b_1$ und 7 bis 40 Gew.%, bezogen auf die Monomermischung, des Monomeren $b_2$, das seinerseits bis zur Hälfte durch Methylmethacrylat ersetzt sein kann.

Sowohl der Kautschuk als auch die Pfropfmischpolymerisate werden üblicherweise nach bekannten Methoden in Lösung oder bevorzugt in Emulsion hergestellt, wobei die Pfropfung auch in bekannter Weise

in mehreren Stufen erfolgen kann. Es entstehen Pfropfmischpolymerisate, bei denen das Copolymerisat der Pfropfhülle in dem Fachmann bekannten Grenzen auf die elastomere Grundlage gepfropft ist. Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder durch einen anschließenden Agglomerationsschritt. Üblicherweise sollte die mittlere Teilchengröße ($d_{50}$-Wert der integralen Massenverteilung, bestimmt nach der in DE-B 2 427 960 beschriebenen Methode zwischen 0,1 und 1 µm, bevorzugt 0,1 und 0,6 µm bei Pfropfmischpolymerisaten, die in bekannter Weise in Emulsion hergestellt wurden, liegen oder zwischen 0,5 und 10 µm bei Produkten, die in bekannter Weise in Lösung hergestellt wurden.

Die Komponenten F und G können auch als handelsübliche Gemische eingesetzt oder vor Herstellung der erfindungsgemäßen Formmassen vorgemischt werden.

Darüber hinaus kann die erfindungsgemäße Formmasse als Komponente H übliche Zusatzstoffe eingemischt enthalten. Als Zusatzstoffe kommen bekannte und bewährte Stabilisatoren, wie sterisch gehinderte Phenole oder Amine oder Phosphor enthaltende Verbindungen in Betracht, die in üblichen Mengen von 0,001 bis 0,5 Gew.-Teilen, bezogen auf 100 Gew.-Teile der Summe aus A bis C, eingesetzt werden. Ferner können Schwefel und/oder Schwefel enthaltende Stabilisatoren, wie Dithiocarbamatkomplexe, Xanthogensäuresalz, Thiazole und Zinksalze von Mercaptobenzimidazolen in üblichen Mengen von 0,01 bis 0,5 Gew.-Teilen, bezogen auf 100 Gew.-Teile der Summe aus A bis C, eingesetzt werden.

Weiterhin kommen als Zusatzstoffe bis zu 50, insbesondere bis zu 25 Gew.-Teile, bezogen auf 100 Gew.-Teile der Summe aus A bis C, übliche Weichmacher, Gleit-und Entformungsmittel, Färbemittel, wie Farbstoffe und Pigmente in Frage. Geeignete Zusatzstoffe sind auch Verstärkungsmittel wie Glasfasern, Kohlenstoffasern, aromatische Polyamidfasern und/oder Füllstoffe, Gipsfasern, synthetische Calciumsilikate, Kaolin, calciniertes Kaolin, Wollastonit, Talkum, Kreide oder Metalle wie Aluminium, Eisen oder Nickel, ferner bei halogenhaltigen Formmassen auch Flammschutzmittel, z.B. bromierte oder chlorierte organische Verbindungen, gegebenenfalls in Mischung mit Antimonverbindungen.

Die Herstellung der erfindungsgemäßen thermoplastischen Formmassen erfolgt zweckmäßigerweise durch Mischen der Komponenten bei Temperaturen im Bereich von 200 bis 320°C, vorzugsweise 250 bis 300°C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die mittleren Verweilzeiten beim Mischen liegen im Bereich von 0,5 bis 30 min, vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich durch Spritzgießen oder Extrusion Formkörper mit vorteilhaften Eigenschaften herstellen.

Unter einer selbstverlöschenden Formmasse im Sinne dieser Erfindung wird eine flammfeste Formmasse verstanden, die in die im folgenden beschriebenen Brandklassen UL 94 V0, V1 oder 5V eingeordnet werden kann.

Die erfindungsgemäßen Formmassen zeichnen sich durch eine gute Verarbeitbarkeit und Wärmeformbeständigkeit aus. Weitere Vorteile liegen in der guten Lösungsmittelbeständigkeit und den guten mechanischen Eigenschaften der Formmasse und der daraus hergestellten Formkörper, daneben auch in deren Oberflächenglanz.

Die in den Beispielen und Vergleichsversuchen erwähnten Tests wurden wie folgt durchgeführt:

1. Die Flammschutzprüfung erfolgt im vertikalen Brandtest nach den Vorschriften der Underwriter Laboratories zwecks Einordnung in eine der Brandklassen UL 94 V0, V1, V2 oder 5V.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 × 12,7 × 3,16 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nie länger als 60 s dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Eine Einstufung in die Brandschutzklasse UL 94 5V erfolgt dann, wenn folgende Kriterien erfüllt sind:

Die Nachbrenn-oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes Abtropfen noch vollständiges Abbrennen eintreten.

2. Die (Kerb)schlagzähigkeiten wurde nach DIN 53 453 gemessen.

3. Die Viskositätszahlen (VZ) wurden nach DIN 53 726 bei 25°C bestimmt, und zwar, wenn nicht anders angegeben, in Dimethylformamid.

Für die Ausführung von Beispielen und Vergleichsversuchen wurden die nachfolgend beschriebenen Stoffe verwendet.

Komponente A $A_1$: Poly-2,6-dimethyl-1,4-phenylenether, mit einer VZ von 0,6 dl/g, gemessen in Chloroform.

$A_2$: Standardpolystyrol mit einer VZ von 0,85 dl/g, gemessen in Toluol.

Komponente B

Die in Tabelle 1 zusammengefaßten Komponenten B wurden durch kontinuierliche Lösungspolymerisation hergestellt.

Tabelle 1: Copolymerisate B

| | Gehalt an Styrol[1] | Gehalt an Acryl-nitril[1] | Gehalt an | [Gew.%][1] | Viskositäts-zahl [dl/g] |
|---|---|---|---|---|---|
| B(1) | 65 | 32 | Hydroxyethyl-acrylat | 3 | 0,95 |
| B(2) | 75 | 20 | Hydroxypropyl-acrylat | 5 | 1,03 |
| B(3) | 75 | 18 | Hydroxypropyl-methacrylat | 7 | 0,85 |
| B(4) | 72 | 25 | Hydroxyethyl-acrylat | 3 | 0,95 |
| B(5) | 81 | 15 | Glycidylmeth-acrylat | 4 | 0,88 |
| B(6) | 70 | 25 | Maleinsäureanhydrid | 5 | 0,82 |
| B(7) | 70 | 28 | Vinyloxazolin | 2 | 0,75 |

[1] Gew.% bezogen auf Copolymerisat

Komponente C $C_1$: Copolymerisat aus 50 Gew.% Styrol und 50 Gew.% Maleinsäureanhydrid mit einem Zahlenmittel des Molekulargewichts von 1700 g/mol (SMSA-Resin 2000 der Fa. Arco)

$C_2$: Copolymerisat aus 97 Gew.% Styrol und 3 Gew.% Glycidylmethacrylat mit einem Gewichtsmittel des Molekulargewichts von 40000 g/mol, hergestellt durch kontinuierliche Lösungspolymerisation bei 135°C und 6 Stunden Verweilzeit.

$C_3$: Copolymerisat aus 99 Gew.% Styrol und 1 Gew.% Vinyloxazolin mit einem Gewichtsmittel des Molekulargewichtes von 200000 g/mol (RPS-Polymer der Fa. DOW).

$C_4$: Copolymerisat aus 95 Gew.% Styrol und 5 Gew.% Hydroxyethylacrylat mit einem Gewichtsmittel des Molekulargewicht von 80000 g/mol, hergestellt durch kontinuierliche Lösungspolymerisation bei 130°C und 6 Stunden Verweilzeit.

Komponente D Triphenylphosphat

Komponente E Styrol-Butadien-Styrol-Dreiblockcopolymer mit einem Styrolgehalt von 30 Gew.% (Cariflex® TR 1102, ® = eingetragenes Warenzeichen der Fa. Shell); Gewichtsmittel des Molekulargewichtes $\overline{M}_w$ = 70000.

Komponente F F(1): Copolymerisat aus 75 Gew.% Styrol und 25 Gew.%, jeweils bezogen auf das Copolymerisat, Acrylnitril mit einer VZ von 1,01 dl/g.

F(2): Copolymerisat aus 65 Gew.% Styrol und 35 Gew.%, jeweils bezogen auf das Copolymerisat, Acrylnitril mit einer VZ von 0,80 dl/g.

Komponente G Die in Tabelle 2 zusammengefaßten Komponenten G wurden durch Emulsionspolymerisation in zwei Schritten hergestellt. Zunächst wurde die Pfropfgrundlage erzeugt, die dann anschließend mit den angegebenen Monomergemischen gepfropft wurde.

Tabelle 2: Pfropfmischpolymerisate G

| | Pfropfgrundlage Art | Menge [Gew.%, bez. auf Propf-mischpolym.] | Pfropfhülle Gewichtsverhältnis Styrol zu Acrylnitril |
|---|---|---|---|
| G(1) | X | 60 | 70/30 |
| G(2) | X | 65 | 80/20 |
| G(3) | Y | 70 | 75/25 |
| G(4) | X | 70 | 70/30 |
| G(5) | X | 60 | 65/35 |
| G(6) | Y | 60 | 70/30 |

X: Polybutadien mit einer Glastemperatur von unter 0°C

Y: Acrylatkautschuk aus 98 Gew.% Butylacrylat und 2 Gew.% Di-cyclo-di-hydro-pentadienyl-acrylat mit einer Glastemperatur von unter -30°C

Komponente H H(1): 2,6-Di-tert.-butyl-p-kresol

H(2): Tris(2,4-di-tert.-butylphenyl)phosphit

H(3): (Tinuvin® 622 LD ® = eingetragenes Warenzeichen der Fa. Ciba-Geigy).

Zu Vergleichszwecken wurden die folgenden Polyphenylenether und Styrolacrylnitril enthaltenden Pfropfmischpolymerisate gemäß der EP-A 170 946 (V(1)) der DE-A 34 32 749 (V(2) und V(3)) und 35 26 549 (V(4)) hergestellt:

V(1): 100 g $A_1$ wurden mit Dimethyldichlorsilan in Toluol unter Verwendung von Tributylamin als Säurefänger umgesetzt. Das Umsetzungsprodukt wurde anschließend zu 100 g eines Styrolacrylnitrilpolymerisats (bestehend aus 62 Gew.% Styrol, 35 Gew.% Acrylnitril und 3 Gew.% Hydroxybutylacrylat, mit einem Gewichtsmittel des Molekulargewichts von 65000, hergestellt durch kontinuierliche Polymerisation) unter Verwendung von Tributylamin als Säurefänger zudosiert. Es wurde wie üblich aufgearbeitet.

V(2): 100 g $A_1$ wurden mit Dimethyldichlorsilan im Toluol unter Verwendung von Tributylamin als Säurefänger umgesetzt. Das Umsetzungsprodukt wurde anschließend zu 100 g eines Styrolacrylnitrilpolymerisates (bestehend aus 72 Gew.% Styrol, 25 % Acrylnitril und 3 Gew.% Hydroxybutylacrylat mit einem $\overline{M}_w$ = 60000, hergestellt durch kontinuierliche Polymerisation) in Toluol unter Verwendung von Tributylamin als Säurefänger in 20 min. zudosiert. Das Pfropfmischpolymere wurde durch Entfernen des Lösungsmittels erhalten.

V(3): 100 g $A_1$ wurden wie bei V(2) mit Dimethyldichlorsilan in Toluol umgesetzt. Das Umsetzungsprodukt wurde anschließend zu 100 g eines Styrolcopolymerisates (bestehend aus 62 Gew.% Styrol, 35 Gew.% Acrylnitril und 3 Gew.% Hydroxybutylacrylat, mit einem $\overline{M}_w$ = 60000, hergestellt durch kontinuierliche Polymerisation) wie bei V(2) zugegeben und aufgearbeitet.

V(4): Durch kontinuierliche Copolymerisation von 60 Gew.% Styrol, 35 Gew.% Acrylnitril, 3 Gew.% Chlormethylstyrol und 2 Gew.% p-Chlormethylstyrol wurde unter Zusatz von 60 Gew.-Teilen Ethylbenzol, bezogen auf 100 Gew.-Teile Monomere, bei 140°C und 9 bar bei 6 h Verweilzeit ein Copolymeres mit statistischer Verteilung der Monomeren und mit $\overline{M}_w$ = 39000 hergestellt. Das Copolymer wurde über einen Extruder entgast und als Granulat gewonnen. 50 g des getrockneten Copolymeren wurde mit 1000 g Toluol und anschließend mit 50 g $A_1$ versetzt und auf 90°C erwärmt. Nach Abkühlen auf 30°C fügte man sofort 50 g einer 50 gew.%igen wäßrigen Natronlauge unter starkem Rühren zu. Nach 5 min. fügte man 5 g Tetrabutylammoniumhydrogensulfat zu. Es wurde 4 h bei Raumtemperatur gerührt und in 1 h auf 60°C erwärmt, die Reaktion 1 h bei 60°C gehalten und anschließend 500 g Toluol hinzugefügt. Es wurde wie üblich aufgearbeitet.

Beispiele 1 bis 11 und Vergleichsversuche 1* bis 15*

Die in Tabelle 3 angegebenen Mengen der Komponenten wurden auf einem Extruder bei 280°C und einer Verweilzeit von 3 Minuten aufgeschmolzen homogenisiert und anschließend granuliert.

Die Komponenten D und H wurden vor Herstellung der Gesamtmischung in einem Fluidmischer der Fa. Henschel, Kassel, bei 40°C vorgemischt.

Vom Granulat wurden Standardteststäbchen für den Brandtest UL 94 und Normkleinstäbe für die Messung der Kerbschlagzähigkeit bei 280°C spritzgegossen. Die Ergebnisse sind in Tabelle 4 zusammengefaßt.

Tabelle 3: Beispiele und Vergleichsversuche

| Bei-spiel | Ver-gleichs-versuche | $A_1$ | B oder V Art | B oder V Menge | C Art | C Menge | D | F Art | F Menge | G Art | G Menge | H Art | H Menge |
|---|---|---|---|---|---|---|---|---|---|---|---|---|---|
| 1 | | 4,0 | B(1) | 4,0 | $C_3$ | 0,8 | | | | G(1) | 1,2 | | |
| | 1* | 4,0 | | | | | | F(2) | 4,8 | G(1) | 1,2 | | |
| | 2* | 3,6 | V(1) | 0,8 | | | | F(2) | 4,4 | G(1) | 1,2 | | |
| 2 | | 3,98 | B(2) | 4,0 | $C_1$ | 1,0 | | | | G(2) | 1,0 | H(1) | 0,02 |
| | 3* | 3,98 | | | | | | F(1) | 5,0 | G(2) | 1,0 | H(1) | 0,02 |
| | 4* | 3,48 | V(1) | 1,0 | | | | F(1) | 4,5 | G(2) | 1,0 | H(1) | 0,02 |
| 3 | | 3,19 | B(3) | 4,5 | $C_2$ | 0,6 | | | | G(1) | 1,7 | H(2) | 0,01 |
| | 5* | 3,19 | | | | | | F(1) | 5,1 | G(1) | 1,7 | H(2) | 0,01 |
| 4 | | 3,3 | B(2) | 4,4 | $C_2$ | 0,8 | | | | G(1) | 1,5 | | |
| | 6* | 3,3 | | | $C_2$ | 0,8 | | F(2) | 4,4 | G(1) | 1,5 | | |
| 5 | | 3,0 | B(1) | 5,0 | $C_1$ | 1,0 | | | | G(3) | 0,5[1)] | | |
| 6 | | 4,0[2)] | B(3) | 3,8 | $C_3$ | 0,3 | | | | G(2) | 1,4 | | |
| 7 | | 2,6 | B(2) | 5,0 | $C_2$ | 0,7 | | F(2) | 0,4 | G(3) | 1,3 | | |
| 8 | | 3,87 | B(4) | 2,8 | $C_1$ | 0,6 | 1,1 | | | G(5) | 1,6 | H(2)<br>H(3) | 0,02<br>0,01 |
| | 7* | 3,87 | | | | | 1,1 | F(2) | 3,4 | G(5) | 1,6 | H(2)<br>H(3) | 0,02<br>0,01 |
| | 8* | 3,27 | V(3) | 1,2 | | | 1,1 | F(2) | 2,8 | G(5) | 1,6 | H(2)<br>H(3) | 0,02<br>0,01 |

Tabelle 3: Fortsetzung

| Bei-spiel | Ver-gleichs-versuche | $A_1$ | B oder V Art | B oder V Menge | C Art | C Menge | D | F Art | F Menge | G Art | G Menge |
|---|---|---|---|---|---|---|---|---|---|---|---|
| 9 | | 4,8 | B(4) | 2,7 | $C_3$ | 0,5 | 0,8 | | | G(6) | 1,2 |
| | 9* | 4,8 | | | | | 0,8 | F(1) | 3,2 | G(6) | 1,2 |
| | 10* | 4,3 | V(2) | 1,0 | | | 0,8 | F(1) | 2,7 | G(6) | 1,2 |
| 10 | | 4,5 | B(5) | 3,4 | $C_1$ | 0,3 | 1,0 | | | G(4) | 0,8 |
| | 11* | 4,5 | | | | | 1,0 | F(1) | 3,7 | G(4) | 0,8 |
| | 12* | 4,1 | V(3) | 0,8 | | | 1,0 | F(1) | 3,3 | G(4) | 0,8 |
| 11 | | 4,7 | B(7) | 2,4 | $C_4$ | 0,7 | 1,2 | | | G(5) | 1,0 |
| | 13* | 4,7 | | | | | 1,2 | F(2) | 3,1 | G(5) | 1,0 |
| | 14* | 4,0 | V(4) | 1,4 | | | 1,2 | F(2) | 2,4 | G(5) | 1,0 |

Komponenten, Mengenangaben in kg

1) zusätzlich 0,5 kg E

2) zusätzlich 0,5 kg $A_1$

Tabelle 4: Eigenschaften der Formmassen

| Beispiel | Vergleichsversuch | Brandschutztest UL 94; nicht bestanden: n.b. | Abtropfen ja: + nein: - br.[2)] | n. br.[3)] | Kerbschlagzähigkeit bei +23°C [kJ/m²] | Schlagzähigkeit [kJ/m²] +23°C | -40°C |
|---|---|---|---|---|---|---|---|
| 1 | | | | | 17 | k[1)] | k[1)] |
| | 1* | | | | 2 | 15 | 5 |
| | 2* | | | | 11 | k | 50 |
| 2 | | | | | 16 | k | 80 |
| | 3* | | | | 3 | 10 | 5 |
| | 4* | | | | 9 | k | 60 |
| 3 | | | | | 20 | k | k |
| | 5* | | | | 2 | 10 | 10 |
| 4 | | | | | 14 | k | 80 |
| | 6* | | | | 4 | 90 | 40 |
| 5 | | | | | 15 | k | 90 |
| 6 | | | | | 16 | k | k |
| 7 | | | | | 15 | k | k |
| 8 | | 5V | - | - | 13 | | |
| | 7* | n.b. | + | + | 4 | | |
| | 8* | V1 | - | - | 5 | | |
| 9 | | V1 | - | - | 15 | | |
| | 9* | n.b. | + | + | 2 | | |
| | 10* | V1 | - | - | 6 | | |
| 10 | | V0 | - | - | 11 | | |
| | 11* | n.b. | + | + | 2 | | |
| | 12* | V1 | - | - | 4 | | |
| 11 | | 5V | - | - | 12 | | |
| | 13* | n.b. | + | + | 2 | | |
| | 14* | V0 | - | - | 6 | | |

1) kein Bruch
2) brennend
3) nicht brennend

## Ansprüche

1. Thermoplastische Formmassen auf Basis von Polyphenylenether, erhältlich durch Mischen bei Temperaturen zwischen 200 und 320°C während 0,5 bis 30 Minuten von im wesentlichen

A) 2 bis 97,99 Gew.-Teilen eines Polymeranteils, der zu mindestens 55 Gew.%, bezogen auf A, aus Polyphenylenether ($A_1$) und zum übrigen Teil aus einem vinylaromatischen Polymerisat $A_2$ besteht,

B) 2 bis 97,99 Gew.-Teilen eines thermoplastischen Copolymerisates aus 30 bis 90,9 Gew.%, bezogen auf B, eines vinylaromatischen Kohlenwasserstoffes mit 8 bis 12 C-Atomen ($b_1$), 9 bis 40 Gew.%, bezogen auf B, eines nitrilgruppenhaltigen, ethylenisch ungesättigten Monomeren mit 3 bis 6 C-Atomen

($b_2$), 0,1 bis 30 Gew.%, bezogen auf B, einer copolymerisierbaren $\alpha,\beta$-ungesättigten Dicarbonylverbindung ($b_3$) oder eines eine Epoxidgruppe ($b_4$), Oxazolingruppe ($b_5$) oder Hydroxylgruppe ($b_6$) tragenden copolymerisierbaren ethylenisch ungesättigten Monomeren oder eines Gemisches von mindestens zwei der Verbindungen $b_3$ bis $b_6$ und 0 bis 30 Gew.%, bezogen auf B, mindestens eines von $b_1$ bis $b_6$ verschiedenen, copolymerisierbaren, ethylenisch ungesättigten Monomeren $b_7$ und

C) 0,01 bis 20 Gew.-Teilen eines von B verschiedenen polymeren Kopplungsmittels, das Anhydrid-, Epoxid-, Oxazolin-und/oder Hydroxylgruppen enthält,

wobei die Summe aus A, B und C 100 Gew.-Teile ergibt.

2. Selbstverlöschende thermoplastische Formmassen nach Anspruch 1, die kein Halogen und zusätzlich 1 bis 40 Gew.%, bezogen auf die Formmasse, einer phosphorenthaltenden Verbindung D enthalten.

3. Thermoplastische Formmassen nach den Ansprüchen 1 bis 2, erhältlich durch Mischen von im wesentlichen 20 bis 79,9 Gew.-Teilen A, 20 bis 79,9 Gew.-Teilen B und 0,1 bis 10 Gew.-Teilen C, jeweils bezogen auf die Summe von A bis C, wobei die Summe aus A, B und C 100 Gew.-Teile ergibt.

4. Thermoplastische Formmassen nach den Ansprüchen 1 bis 3, in denen B 0,1 bis 30 Gew.%, bezogen auf B, des eine Hydroxylgruppe tragenden Monomeren $b_6$ einpolymerisiert enthält und C Anhydrid-, Epoxid-und/oder Oxazolingruppen enthält.

5. Thermoplstische Formmassen nach den Ansprüchen 1 bis 4, worin die Komponente $b_3$ eine Verbindung der allgemeinen Formel I ist

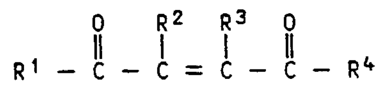

I,

wobei

$R^1$ und $R^4$ Hydroxylgruppen, -O-$C_1$-$C_{25}$-Alkyl, Aroxy-, -$NR^5R^6$ oder gemeinsam -O-oder -$NR^5$,

$R^2$ und $R^3$ Wasserstoff oder, wenn $R^2$ oder $R^3$ Wasserstoff ist, $C_1$-$C_{25}$-Alkyl oder Aryl,

$R^5$ und $R^6$ Wasserstoff, Alkylgruppen mit bis zu 12 C-Atomen oder Arylgruppen darstellen.

6. Thermoplastische Formmassen nach den Ansprüchen 1 bis 5, worin das mindestens eine Epoxidgruppe tragende Monomere $b_4$ die Struktureinheit

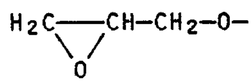

im Molekül enthält.

7. Thermoplastische Formmassen nach den Ansprüchen 1 bis 6, dadurch gekennzeichnet, daß das mindestens eine Oxazolingruppe tragende Monomere $b_5$ die allgemeine Formel II

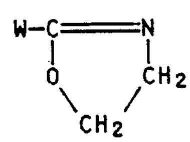

II

hat, wobei W eine mit $b_1$ und $b_2$ copolymerisierbare Doppelbindung enthält.

8. Thermoplastische Formmassen nach den Ansprüchen 1 bis 7, wobei das mindestens eine Hydroxylgruppe tragende Monomere $b_6$ eine Verbindung der allgemeinen Formel IV

$CH_2=CR^7$-K-OH IV

ist, wobei

$R^7$ Wasserstoff oder $C_1$-$C_{25}$-Alkyl,

K 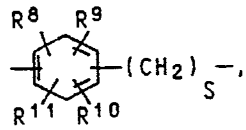, 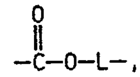

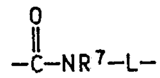 oder

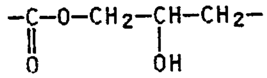 ,

$R^8$ bis $R^{11}$ Wasserstoff, $C_1$-$C_8$-Alkyl oder -CN,
S eine ganze Zahl von 0 bis 6 und
L ein Brückenglied ist.

9. Thermoplastische Formmasssen nach den Ansprüchen 1 bis 8, in denen die Komponente C aus einem Copolymerisat

- $C_1$ aus 40 bis 60 Gew.% Styrol und 40 bis 60 Gew.% Maleinsäureanhydrid mit einem Zahlenmittel des Molekulargewichtes zwischen 800 und 2000, wobei sich die Gew.% auf $C_1$ beziehen,
- $C_2$ aus 90 bis 98 Gew.% Styrol und 2 bis 10 Gew.% Glycidylacrylat und/oder Glycidylmethacrylat mit einem Gewichtsmittel des Molekulargewichtes zwischen 35 000 bis 250 000, wobei sich die Gew.% auf $C_2$ beziehen, und/oder
- $C_3$ aus 90 bis 99,5 Gew.% Styrol, 0,5 bis 10 Gew.% Vinyloxazolin oder/und 2-Allyloxazolin und 0 bis 10 Gew.%

N-vinylpyrrolidon, Acrylamid, Methacrylamid, Acrolein und/oder Allylalkohol mit einem Gewichtsmittel des Molekulargewichtes zwischen 35 000 und 250 000, wobei sich die Gew.% auf $C_3$ beziehen,
besteht.

10. Verfahren zur Herstellung von thermoplastischen Formmassen gemäß den Ansprüchen 1 bis 9 durch Mischen der Komponenten bei einer Temperatur im Bereich von 200 bis 320°C während 0,5 bis 30 Minuten.